**Europäisches Patentamt**

**European Patent Office**

**Office européen des brevets**

(19)

(11) **EP 1 253 588 A1**

(12) **EUROPEAN PATENT APPLICATION**
published in accordance with Art. 158(3) EPC

(43) Date of publication:
**30.10.2002 Bulletin 2002/44**

(51) Int Cl.⁷: **G11B 7/135**, G11B 11/105

(21) Application number: **01902732.5**

(86) International application number:
**PCT/JP01/00725**

(22) Date of filing: **01.02.2001**

(87) International publication number:
**WO 01/057862 (09.08.2001 Gazette 2001/32)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **04.02.2000 JP 2000027452**

(71) Applicant: **Matsushita Electric Industrial Co., Ltd.**
**Kadoma-shi, Osaka 571-8501 (JP)**

(72) Inventors:
 • **TAKASUKA, Shoichi**
  **Osaka-shi, Osaka 536-0025 (JP)**

 • **IJIMA, Shin'ichi**
  **Takatsuki-shi, Osaka 569-1142 (JP)**
 • **NAKANISHI, Naoki**
  **Kurita-gun, Shiga 520-3034 (JP)**
 • **NAKANISHI, Hideyuki**
  **Otsu-shi, Shiga 520-0232 (JP)**

(74) Representative: **Tothill, John Paul**
 **Frank B. Dehn & Co.**
 **179 Queen Victoria Street**
 **London EC4V 4EL (GB)**

(54) **OPTICAL HEAD DEVICE**

(57)   A 3-beam-generating grating 2, a collimating lens 3, a polarizing beam splitter 4, a rising mirror 5 and an objective lens 6 are arranged sequentially in the optical path between a semiconductor laser device 1 and an information recording medium 7. The reflecting face of the polarizing beam splitter 4 has a reflection characteristic such that the reflectance is minimum for return light L2 at an angle of 45 degrees whereas the reflectance increases as the incident angle of the return light L2 deviates from 45 degrees. This realizes an optical head device that is not likely to cause the decrease in tracking error signals even if the objective lens shifts in radial directions of the recording medium.

FIG. 1

**Description**

Technical Field

The present invention relates to an optical head device for recording or reproducing information with respect to an information recording medium by a magneto-optical method.

Background Art

Conventionally, as an optical head device of this kind, for example, an optical head device disclosed in JP 6 (1994)-168462 A, etc. is known.

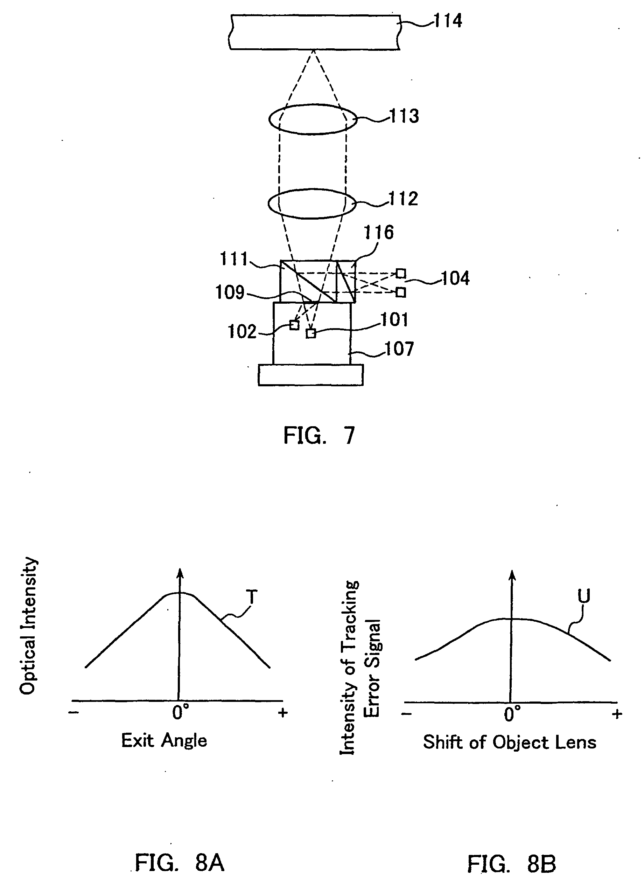

Hereinafter, a configuration and an operation of a conventional optical head device will be described. FIG. 7 is an arrangement view showing an optical system of an optical head device and an information recording medium in the prior art.

First of all, a configuration of a conventional optical head device will be described. As shown in FIG. 7, inside a semiconductor laser unit 107, a semiconductor laser device 101 and a photodetector 102 for servo signals for detecting focus error signals and tracking error signals are provided. In the optical path between a semiconductor laser device 101 and an information recording medium 114, a polarizing beam splitter 111, a collimating lens 112 and an objective lens 113 are arranged sequentially from the side of the semiconductor laser device 101. The polarizing beam splitter 111 is fixed on the upper surface of the semiconductor laser unit 107. Furthermore, on the surface at the side of the semiconductor laser device 101 of the polarizing beam splitter 111, a grating 109 is formed. Furthermore, outside of the optical path between the semiconductor laser device 101 and the information recording medium 114, photodetectors 104 for information signals are provided in the location of the side (right side in FIG. 7) of the polarizing beam splitter 111, and on the side surface at the side of the photodetector 104 for information signals of the polarizing beam splitter 111, a Wollaston prism 116 is provided.

Next, the operation of the above-mentioned conventional optical head device will be described. Light emitted from the semiconductor laser device 101 and reflected by the information recording medium 114 (hereinafter, referred to as "return light") passes through the objective lens 113 and the collimating lens 112 sequentially, and then enters the polarizing beam splitter 111. This polarizing beam splitter 111 splits a portion of the return light by reflecting it in the direction of the Wollaston prism 116. Since in the Wollaston prism 116 the refractive index of p-polarized light is different from that of s-polarized light, the return light entering the Wollaston prism 116 is divided into the p-polarized light component and the s-polarized light component in the Wollaston prism 116. The two-divided photodetector 104 for information signals is placed in a place where the information signal light, which was divided into two components, is converged, respectively. Based on the output of this photodetector 104 for information signals, information signals are detected. On the other hand, the return light passing though the polarizing beam splitter 111 is diffracted by the grating 109 and then enters the photodetector 102 for servo signals. Then, based on the output from the photodetector 102 for servo signals, focus error signals and tracking error signals are detected. In FIG. 7, the light emitted from the semiconductor laser device 101 and the return light are indicated by broken lines.

In general, the optical intensity of light emitted from a semiconductor laser device depends on the exit angle as shown by the curve T in FIG. 8A. Therefore, in the above-mentioned conventional optical head device, when the objective lens 113 shifts in radial directions of the information recording medium 114, the optical intensity of the light taken in by the objective lens 113 is reduced. Therefore, as shown by the curve U in FIG. 8B, the tracking error signals decrease, thus making the servo operation unstable.

Disclosure of the invention

With the foregoing in mind, it is an object of the present invention to provide an optical head device that is not likely to cause the decrease in tracking error signals even if the objective lens shifts in radial directions of the information recording medium.

In order to achieve the above-mentioned object, the optical head device according to the present invention includes a semiconductor laser device irradiating an information recording medium with a laser beam, and a reflecting means for reflecting the laser beam reflected by the information recording medium and returning; wherein the reflectance of the laser beam by the reflecting means increases as the irradiating position on the reflecting means deviates from the optical axis of the laser beam. The optical intensity of the laser beam emitted from the semiconductor laser device depends on the exit angle so that it is reduced as the irradiating position on the reflecting means deviates from the center of the optical axis. However, according to the above-mentioned configuration of the optical head device, since the optical head device has a reflection characteristic such that the reflectance of the laser beam by the reflecting means increases as the irradiating position on the reflecting means deviates from the optical axis of the laser beam, it is possible to correct the dependence of the optical intensity of the laser beam on the exit angle. Therefore, it is possible to suppress the decrease in tracking error signals when the objective lens shifts in radial directions of the information recording medium. As a result, since the dependence of the strength of the tracking error signals on the objective lens shifts is reduced when compared to the conventional optical head device, the optical head device having a stable servo operation can be obtained.

Furthermore, in the configuration of the optical head device according to the present invention, it is preferable that a photodetector for receiving the laser beam reflected by the reflecting means further is provided.

Furthermore, in the configuration of the optical head device according to the present invention, it is preferable that a polarizing light splitting means for splitting the laser beam reflected by the information recording medium and returning is used as the reflecting means. In this case, it is preferable that the polarizing light splitting means is a polarizing beam splitter. Furthermore, in this case, it is preferable that the reflectance of a p-polarized light component of the laser beam is minimum when an incident angle of the laser beam reflected by the information recording medium and returning with respect to the reflecting face of the polarizing light splitting means is 45 degrees. With such a preferable example, in the optical head device using the p-polarized light component so as to detect tracking error signals, it is possible to prevent the tracking error signals from decreasing when the objective lens shifts in radial directions of the information recording medium. Furthermore, in this case, it is preferable that the reflectance of an s-polarized light component of the laser beam is minimum when an incident angle of the laser beam reflected by the information recording medium and returning with respect to the reflecting face of the polarizing light splitting means is 45 degrees. With such a preferable example, in the optical head device using the s-polarized light component so as to detect tracking error signals, it is possible to prevent the tracking error signals from decreasing when the objective lens shifts in radial directions of the information recording medium.

Furthermore, in the optical head device of the present invention, it is preferable that the optical head device further includes a diffraction means for splitting the laser beam emitted from the semiconductor laser device into a plurality of sub-beams including a preceding sub-beam and a subsequent sub-beam, and a means for detecting tracking error signals; wherein the reflected light from the information recording medium relating to the preceding sub-beam or the subsequent sub-beam is reflected by the reflecting means and the reflected light is used so as to detect the tracking error signals. With such a preferable example, since the dependence of the tracking error signal intensity on the shift of the objective lens when the objective lens shifts in radial directions of the information recording medium becomes smaller as compared with the conventional one, the stable servo operation can be realized.

Furthermore, in the configuration of the optical head device of the present invention, it is preferable that the optical head device further includes a diffraction means for splitting the laser beam emitted from the semiconductor laser device into a plurality of sub-beams including a preceding sub-beam and a subsequent sub-beam, and a means for detecting information signals and tracking error signals; wherein the reflected light from the information recording medium relating to the preceding sub-beam or the subsequent sub-beam is reflected by the reflecting means; the reflected light is further split into two light fluxes: a p-polarized light component and an s-polarized light component; and the two light fluxes are detected in the same light receiving region so as to detect the information signals and the tracking error signals. With such a preferable example, it is possible to prevent the information signals and the tracking error signals, which are obtained by using the p-polarized light component and the s-polarized light component, from decreasing when the objective lens shifts in radial directions of the information recording medium.

Brief Description of Drawings

FIG. 1 is an arrangement view showing a configuration of an optical head device in a first embodiment according to the present invention.

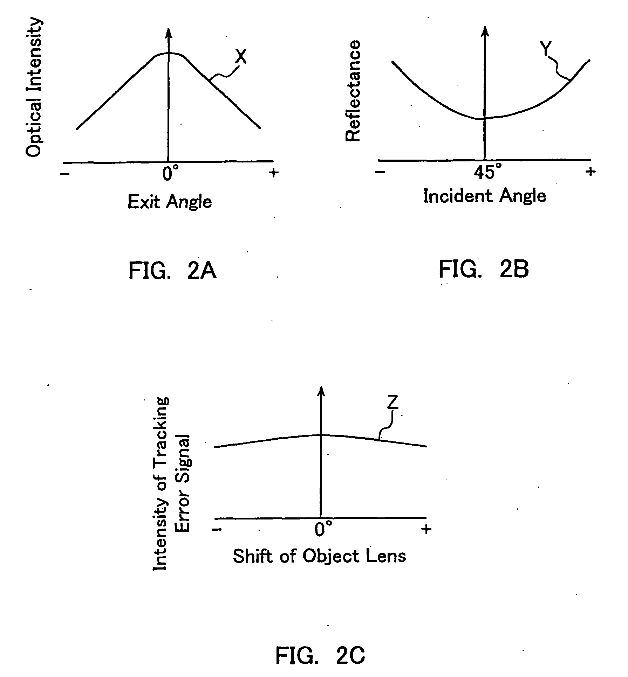

FIG. 2A is a view showing the dependence of the optical intensity of laser beam emitted from a semiconductor laser device used for an optical head device on the exit angle in a first embodiment according to the present invention; FIG. 2B is a view showing the dependence of the reflectance of a polarizing beam splitter used for an optical head device on the incident angle in a first embodiment according to the present invention; and FIG. 2C is a view showing the dependence of the intensity of tracking error signals of the optical head device on the shift of an objective lens in a first embodiment according to the present invention.

FIG. 3 is an arrangement view showing a configuration of an optical head device in a second embodiment according to the present invention.

FIG. 4 is a cross-sectional view showing an optical unit shown in FIG. 3.

FIG. 5 is a plan view showing a light receiving substrate shown in FIG. 4.

FIG. 6 is a partial plan view showing a hologram optical element shown in FIGs. 3 and 4.

FIG. 7 is an arrangement view showing an optical system of an optical head device and an information recording medium in the prior art.

FIG. 8A is a view showing the dependence of the optical intensity of laser beam emitted from a semiconductor laser device used for an optical head device on the exit angle in the prior art; and FIG. 8B is a view showing the dependence of the intensity of tracking error signals of an optical head device on the shift of an objective lens in the prior art.

Best Mode for carrying out the Invention

Hereinafter, the present invention will be described by way of embodiments.

[First Embodiment]

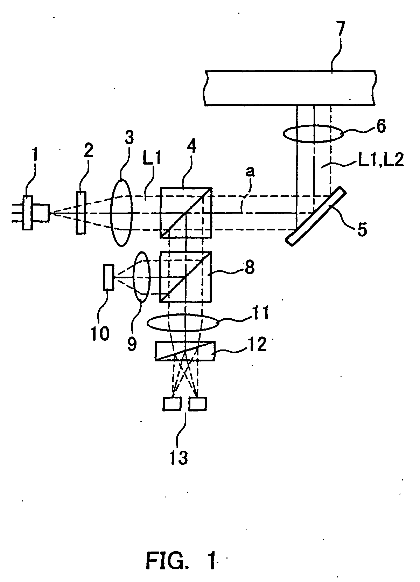

First, the optical head device in the first embodiment according to the present invention will be explained with reference to FIG. 1 and FIG. 2.

FIG. 1 is an arrangement view showing a configuration of an optical head device in a first embodiment according to the present invention. As shown in FIG. 1, in an optical path between a semiconductor laser device 1 and an information recording medium 7, for example, CD (compact disk) or DVD (digital video disk), in which information is recorded or reproduced, a 3-beam-generating grating 2 for splitting laser beam emitted from the semiconductor laser device 1 into a plurality of subbeams including a preceding sub-beam and a subsequent sub-beam, a collimating lens 3, a polarizing beam splitter 4, a mirror 5 and an objective lens 6 are arranged sequentially from the side of the semiconductor laser device 1. Furthermore, in the optical path between the polarizing beam splitter 4 and a photodetector 13 for information signals, a beam splitter 8, a converging lens 11 and a Wollaston prism 12 are arranged sequentially from the side of the polarizing beam splitter 4. Furthermore, in an optical path between the polarizing beam splitter 4 and a photodetector 10 for servo signals, the beam splitter 8 and a converging lens 9 are arranged sequentially from the side of the polarizing beam splitter 4. Moreover, the polarizing beam splitter 4 is arranged so that the reflecting face thereof is inclined at 45 degrees with respect to an optical axis "a" (shown by a dashed line in FIG. 1) of the laser beam L1 (shown in broken line in FIG. 1) emitted to the semiconductor laser device 1 and the light L2 (shown by a broken line in FIG. 1) reflected by the information recording medium 7 (hereinafter, also referred to as "return light"). Herein, the reflecting face of the polarizing beam splitter 4 has a reflection characteristic such that the reflectance is minimum when an incident angle of the return light L2 is 45 degrees and the reflectance increases as the incident angle of the return light L2 deviates from 45 degrees (that is, the return light L2 deviates from the optical axis "a") as shown in by the curve Y in FIG. 2B.

The above-mentioned reflection characteristic can be realized by making the polarizing beam splitter 4 have, for example, the following structure. That is, when a laser beam having a wavelength of $\lambda$ = 780 nm is used as the light emitted from the semiconductor laser device 1, the polarizing beam splitter 4 may be formed by alternately laminating, for example, $MgF_2$ layers (refractive index n = 1.38) and $SiO_2$ layers (refractive index n = 1.4538) each having a thickness of $\lambda/4$ in six layers each (total 12 layers) and sandwiching the laminate between glass (refractive index n = 1.5113). When laser beam having a wavelength of $\lambda$ = 780 nm is allowed to be incident on the laminated film (reflecting face) of $MgF_2$ layers and $SiO_2$ layers, the reflectance is minimum and the reflection characteristic is expressed by a parabola in which the convex faces downward when the incident angle is 45 degrees (see FIG. 2B).

The optical intensity of the laser beam L1 emitted from the semiconductor laser device 1 has the dependence on the exit angle as shown by the curve X in FIG. 2A and the optical intensity decreases as the laser beam L1 deviates from the center of the optical axis. If as it is, when the objective lens 6 shifts in radial directions of an information recording medium 7, the optical intensity of the laser beam L1 taken in by the objective lens 6 is reduced. As a result, the tracking error signals decrease, thus making the servo operation unstable. However, as mentioned above, in this embodiment, since the reflecting face of the polarizing beam splitter 4 has a reflection characteristic such that the reflectance is minimum when an incident angle of the return light L2 is 45 degrees whereas the reflectance increases as the incident angle of the return light L2 deviates from 45 degrees (FIG. 2B), it is possible to correct the dependence of the optical intensity of the laser beam L1 emitted from the semiconductor element 1 on the incident angle. Therefore, it is possible to suppress the tracking error signals from decreasing when the objective lens 6 shifts in radial directions of the information recording medium 7. As a result, as shown by the curve Z in FIG. 2C, the dependence of the intensity of the tracking error signals on the shift of the objective lens becomes smaller as compared with the conventional case (FIG. 8B). Therefore, the servo operation does not become unstable.

Furthermore, with the configuration in which the reflectance of the p-polarized light component of the return light L2 is minimum when an incident angle with respect to the reflecting face of the polarizing beam splitter 4 of the return light L2 is 45 degrees, it is possible to prevent the quantity of the p-polarized light component from being reduced when the objective lens 6 shifts in radial directions of the information recording medium 7.

Furthermore, with the configuration in which the reflectance of the s-polarized light component of the return light L2 is minimum when an incident angle with respect to the reflecting face of the polarizing beam splitter 4 of the return light L2 is 45 degrees, it is possible to prevent the quantity of the s-polarized light component from being reduced when the objective lens 6 shifts in radial directions of the information recording medium 7.

Next, the operation of the optical head device in this embodiment will be described.

As shown in FIG. 1, the laser beam L1 emitted from the semiconductor laser device 1 is split into three beams, that is, a zero order diffracted light beam and ±first order diffracted light beams when passing through the 3-beam-generating grating 2, and then enters the collimating lens 3. The laser beam L1 entering the collimating lens 3 is converted from divergent light fluxes into parallel light fluxes when passing through the collimating lens 3, and then it passes through the polarizing beam splitter 4. The laser beam L1 passing through the polarizing beam splitter 4 is reflected by the mirror 5 and then converged onto the information recording medium 7 by the objective lens 6. The light reflected by the information recording medium 7 travels on the above-mentioned optical path as a return light L2 in the opposite direction, and enters the polarizing beam splitter 4 again. A portion of the return light L2 entering the polarizing beam splitter 4 is reflected by polarizing beam splitter 4 (hereinafter, a portion of the return light L2 reflected by polarizing beam splitter 4 is referred to as "reflected split light") and enters a beam splitter 8.

A portion of the reflected split light entering the beam splitter 8 passes through the beam splitter 8 as it is, subjected to the converging operation by the converging lines 11, and then enters the Wollaston prism 12. The light entering the Wollaston prism 12 is divided into the p-polarized light component and the s-polarized light component, and then received by the photodetector 13 for information signals. By carrying out the differential detection of these two light (p-polarized light component and s-polarized light component), the information signal RF can be obtained.

On the other hand, a portion of the rest of the split light entering the beam splitter 8 is reflected by the beam splitter 8, subjected to the converging operation by the converging lens 9 and then received by the photodetector 10 for servo signals. Then, focus error signals are detected by an astigmatic method and tracking error signals are detected by the 3-beam method.

In this way, in this embodiment, the tracking error signals are detected by using the reflected split light from the polarizing beam splitter 4. In addition, as mentioned above, in this embodiment, the reflecting face of the polarizing beam splitter 4 has a reflection characteristic such that the reflectance is minimum when an incident angle of the return light L2 is 45 degrees whereas the reflectance increases as the incident angle of the return light L2 deviates from 45 degrees. Therefore, the decrease of the tracking error signals can be suppressed when the objective lens 6 shifts in radial directions of the information recording medium 7, and thus the optical head device having a stable servo operation can be realized.

In this embodiment, the method in which tracking error signals are detected by the 3-beam method was described. However, the present invention is not necessarily limited to this method. The same effect can be obtained by using, for example, a phase difference method, or a push-pull method, further, a differential push-pull method, and the like.

Furthermore, in this embodiment, the optical head device having an afocal optical system provided with the collimating lens 3 and the objective lens 6 was described as an example. However, the optical head device is not necessarily limited to this configuration. The same effect can be obtained by using, for example, a focal optical system using only the objective lens 6.

Furthermore, since also the information signal RF is detected by using the reflected split light from the polarizing beam splitter 4, even if the objective lens 6 shifts in radial directions of the information recording medium 7, the reduction in the information signals is not likely to occur. Consequently, the information signal with high quality can be obtained.

Furthermore, in this embodiment, the magneto-optical type head device in which the return light L2 is divided into the p-polarized light component and the s-polarized light component by using the Wollaston prism 12, thereby detecting information signals was described as an example. An optical head device for detecting information signals by reading out the change in the quantity of light by receiving all the light converged from the converging lens 11 without using Wollaston prism 12 (i.e. without dividing into the p-polarized light component and the s-polarized light component) similarly can be used. It is needless to say that, instead of the polarizing beam splitter 4, a beam splitter without polarization characteristic can be used.

[Second Embodiment]

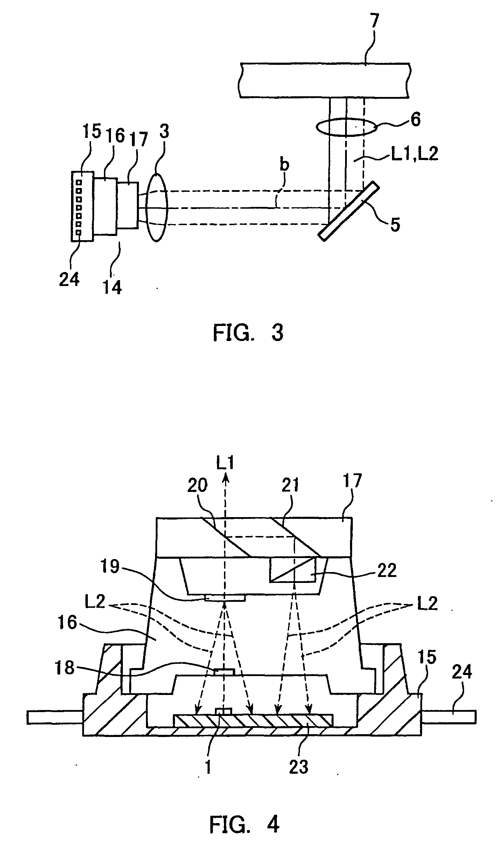

Next, the optical head device in the second embodiment of the present invention will be described with reference to FIGs. 3 to 6.

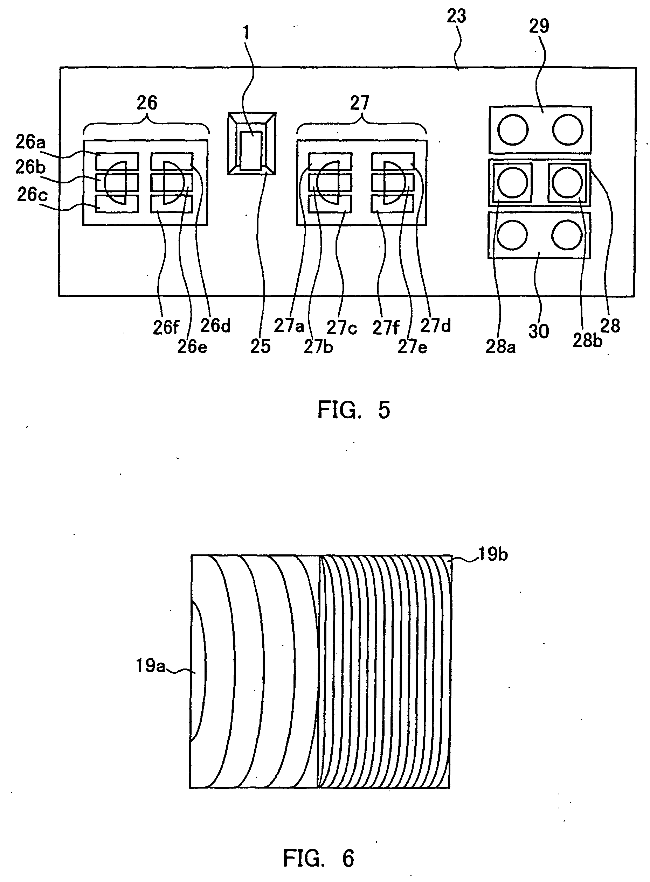

FIG. 3 is an arrangement view showing a configuration of an optical head device in a second embodiment of the present invention; FIG. 4 is a cross sectional view showing an optical unit shown in FIG. 3; FIG. 5 is a plan view showing a light receiving substrate shown in FIG. 4; and FIG. 6 is a partial plan view showing a hologram optical element shown in FIGs. 3 and 4. As shown in FIG. 3, in this embodiment, all the component members necessary to constitute the optical head device excluding a collimating lens 3, a mirror 5 and an objective lens 6 are integrated into one unit as an optical unit 14. In FIG. 3, reference numeral 7 denotes an information recording medium.

The following is a description of a configuration of the optical unit 14. As shown in FIGs. 4 and 5, a semiconductor laser device 1 is placed in the concave portion provided on the light receiving substrate 23. Furthermore, on the light receiving substrate 23, photodetectors 26, 27 and 28 including a plurality of elements and photodetectors 29 and 30 are formed. Specifically, the photodetector 26 includes six elements 26a, 26b, 26c, 26d, 26e and 26f. Also, the photodetector 27 includes six elements 27a, 27b, 27c, 27d, 27e and 27f. The photodetector 28 includes two elements 28a and 28b. As shown in FIGs. 3 and 4, the light receiving substrate 23 is arranged inside a package 15 having a plurality of terminals 24. On the package 15, a hologram optical element 16, in which a 3-beam-generating grating 18 and a grating 19 are integrated, is placed as a cap. Moreover, as shown in FIG. 6, the grating 19 includes two grating regions 19a and 19b, each having a different lens effect. Furthermore, curves and the interval therebetween in FIG. 6 shows the outline of curves of the pitch of the grating and the interval therebetween. As shown in FIGs. 3 and 4, on the hologram optical element 16, a composite microprism 17, on which a polarizing beam splitter 20, a reflection mirror 21 and a Wollaston prism 22 are integrated, is mounted.

The polarizing beam splitter 20 is arranged in a state in which the reflecting face inclines by only 45 degrees with respect to an optical axis b (shown by a dashed line in FIG. 3) of the laser beam L1 (shown by broken line in FIGs. 3 and 4) emitted from the semiconductor laser device 1 and a return light L2 (shown by a broken line in FIGs. 3 and 4). Herein, the reflecting face of the polarizing beam splitter 20 has a reflection characteristic such that the reflectance of the reflecting face of the polarizing beam splitter 20 is minimum when an incident angle of the return light L2 is 45 degrees whereas the reflectance increases as the incident angle of the return light L2 deviates from 45 degrees (that is, the return light L2 deviates from the optical axis) as shown by the curve Y in FIG. 2B. This reflection characteristic also can be realized in a manner similar to the first Embodiment.

The optical intensity of the laser beam L1 emitted from the semiconductor laser device 1 depends on the exit angle as shown by the curve X in FIG. 2A and the optical intensity is reduced as the laser beam L1 deviates from the center of the optical axis. If in this case, the objective lens 6 shifts in radial directions of the information recording medium 7, the optical intensity of the laser beam L1 taken in by the objective lens 6 is reduced. As a result, the tracking error signals decrease, thus making the servo operation unstable. However, as mentioned above, in this embodiment, since the reflecting face of the polarizing beam splitter 20 has a reflection characteristic such that the reflectance is minimum when an incident angle of the return light L2 is 45 degrees whereas the reflectance increases as the incident angle of the return light L2 deviates from 45 degrees, it is possible to correct the dependence of the optical intensity of the laser beam light L1 emitted from the semiconductor laser device 1 on the exit angle. As a result, it is possible to suppress the decrease in the tracking error signals when the objective lens 6 shifts in radial directions of the optical recording medium. As a result, the dependence of the intensity of the tracking error signal on the shift of the objective lens becomes smaller as compared with the conventional case (FIG. 8B), as shown by the curve Z in the FIG. 2C, the servo signal does not become unstable.

Next, the operation of the optical head device in this embodiment will be described.

As shown in FIGs. 3 and 4, the laser beam L1 emitted from the semiconductor laser device 1 is split into three beams, that is, a zero order diffracted light beam and ±first order diffracted light beams when passing through a 3-beam-generating grading 18, passes through a polarizing beam splitter 20, and then enters a collimating lens 3. The laser beam L1 entering the collimating lens 3 is first converted from divergent light fluxes into the parallel light fluxes when passing through the collimating lens 3, is reflected by the mirror 5 and converged onto the information recording medium 7 by the objective lens 6. The light reflected by the information recording medium 7 travels on the optical path mentioned above as a return light L2 in the opposite direction and enters the polarizing beam splitter 20 again.

A portion of the return light L2 entering the polarizing beam splitter 20 passes through the polarizing beam splitter 20 (hereinafter, the return light L2, which passes through the polarizing beam splitter 20, is referred to as "passed-through split light") and is subjected to different diffracting and converging operations by the two grating regions 19a and 19b, respectively when entering the grating 19. In other words, in a main beam of the passed-through split light entering the grating region 19a, the +first order diffracted light enters the elements 26d, 26e and 26f of the photodetector 26, and the -first order diffracted light enters the elements 27a, 27b and 27c of the photodetector 27. Similarly, in the main beam of the passed-through split light entering the grating region 19b, the +first order diffracted light enters the elements 26a, 26b and 26c of the photodetector 26, and the -first order diffracted light enters the elements 27d, 27e and 27f of the photodetector 27. Herein, focus error signals FE can be detected by the calculation expressed by using the following Formula 1 by the D-SSD (Double Spot Size Detection) method.

$$[\text{Formula 1}]$$

$$FE = \{(26b+26e)$$

$$+(27a+27c+27d+27f)\}$$

$$- \{(26a+26c+26d+26f)$$

$$+(27b+27e)\}$$

In the Formula 1, the reference numerals showing the elements such as 26a and 26b are assumed to indicate the optical intensity of the light entering the elements.

Furthermore, in FIG. 5, reference numeral 25 denotes a micro mirror for reflecting the light emitted from the semiconductor laser device 1 and leading it into the direction of the 3-beam-generating grating 18. Sub-beams diffracted by the grating 19 are omitted in the drawing for simplification.

On the other hand, a portion of the rest of the return light L2 entering the polarizing beam splitter 20 is reflected by the polarizing beam splitter 20 (hereinafter, the return light L2 reflected by the polarizing beam splitter 20 is referred to as "reflected split light"), then further reflected by the reflection mirror 21 and enters the Wollaston prism 22. The reflected split light entering the Wollaston prism 22 is divided into the p-polarized light component and the s-polarized light component, and the main beam is received by two elements 28a and 28b of the photodetector 28 by each polarized light component. Furthermore, the two sub-beams of the p-polarized light component and the s-polarized light component are received as a whole by photodetectors 29 and 30. Herein, the tracking error signal TE can be detected by the calculation expressed by using the following Formula 2 by the 3-beam method.

[Formula 2]

$$TE = 29 - 30$$

Furthermore, in the case of, for example, RAM disk of MD or MO disk, the information signal RF can be detected by using the differential calculation expressed by the following Formula 3.

[Formula 3]

$$RF = 28a - 28b$$

Furthermore, in the case of, for example, CD, CD-ROM, CD-R, CD-RW, ROM disk of MD, DVD, DVD-ROM, DVD-RAM, and the like, the information signal RF can be detected by using the calculation expressed by the following Formula 4.

[Formula 4]

$$RF = 28a + 28b$$

Moreover, in the above-mentioned [Formula 2] to [Formula 4], the reference numerals 29, 28a, etc. showing the photodetectors and elements are assumed to indicate the optical intensity of the light entering the photodetectors and elements.

As mentioned above, according to the configuration in which the reflected split light from the polarizing beam splitter 20 is used so as to detect the tracking error signal, by the same effect as in the first embodiment, an optical head device having a stable servo-operation can be realized. Furthermore, since almost all the components necessary to constitute the optical head device are integrated into one piece, a miniaturized and light weight optical head device can be realized. Furthermore, since information signal RF also can be detected by using the reflected split light from the polarizing beam splitter 20, even if the objective lens 6 shifts in radial directions of the information recording medium 7, the information signals are not like to be reduced. As a result, the high quality information signals can be obtained.

Industrial Applicability

The optical head device of the present invention has a reflection characteristic such that the reflectance of the reflecting means increases as laser beam deviates from the optical axis. Thus, it is possible to correct the dependence of the optical intensity of the laser beam on the exit angle. Therefore, it is possible to suppress the decrease in the tracking error signals when the objective lens shifts in radial directions of the information recording medium. Consequently, the dependence of the intensity of the tracking error signals on the shift of the objective lens becomes smaller as compared with the conventional case, and thus optical head device realizing a stable servo operation can be provided.

**Claims**

1. An optical head device, comprising:

   a semiconductor laser device irradiating an information recording medium with laser beam, and
   a reflecting means for reflecting the laser beam reflected by the information recording medium and returning;

   wherein the reflectance of the laser beam by the reflecting means increases as the irradiating position on the reflecting means deviates from the optical axis.

2. The optical head device according to claim 1, further comprising a photodetector for receiving the laser beam reflected by the reflecting means.

3. The optical head device according to claim 1, wherein a polarizing light splitting means for splitting the laser beam reflected by the information recording medium and returning is used as the reflecting means.

4. The optical head device according to claim 3, wherein the polarizing light splitting means is a polarizing beam splitter.

5. The optical head device according to claim 3, wherein the reflectance of a p-polarized light component of the laser beam is minimum when an incident angle of the laser beam reflected by the information recording medium and returning with respect to the reflecting face of the polarizing light splitting means is 45 degrees.

**6.** The optical head device according to claim 3, wherein the reflectance of an s-polarized light component of the laser beam is minimum when an incident angle of the laser beam reflected by the information recording medium and returning with respect to the reflecting face of the polarizing light splitting means is 45 degrees.

**7.** The optical head device according to claim 1, further comprising a diffraction means for splitting the laser beam emitted from the semiconductor laser device into a plurality of sub-beams including a preceding sub-beam and a subsequent sub-beam, and a means for detecting tracking error signals; wherein the reflected light from the information recording medium relating to the preceding sub-beam or the subsequent sub-beam is reflected by the reflecting means and the reflected light is used so as to detect the tracking error signals.

**8.** The optical head device according to claim 1, further comprising a diffraction means for splitting the laser beam emitted from the semiconductor laser device into a plurality of sub-beams including a preceding sub-beam and a subsequent sub-beam, and a means for detecting information signals and tracking error signals; wherein the reflected light from the information recording medium relating to the preceding sub-beam or the subsequent sub-beam is reflected by the reflecting means; the reflected light is further split into two light fluxes, a p-polarized light component and an s-polarized light component; and the two light fluxes are detected in the same light receiving region so as to detect the information signals and the tracking error signals.

FIG. 1

FIG. 2A

FIG. 2B

FIG. 2C

FIG. 3

FIG. 4

FIG. 5

FIG. 6

FIG. 7

## FIG. 8A

Optical Intensity

Exit Angle

T

## FIG. 8B

Intensity of Tracking Error Signal

Shift of Object Lens

U

## INTERNATIONAL SEARCH REPORT

| International application No. |
| --- |
| PCT/JP01/00725 |

**A. CLASSIFICATION OF SUBJECT MATTER**
Int.Cl⁷ G11B 7/135, G11B 11/105

According to International Patent Classification (IPC) or to both national classification and IPC

**B. FIELDS SEARCHED**

Minimum documentation searched (classification system followed by classification symbols)
Int.Cl⁷ G11B 7/09 - 7/22, 11/00 - 11/105

Documentation searched other than minimum documentation to the extent that such documents are included in the fields searched
Jitsuyo Shinan Koho 1922-1996 Toroku Jitsuyo Shinan Koho 1994-2001
Kokai Jitsuyo Shinan Koho 1971-2001 Jitsuyo Shinan Toroku Koho 1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP, 5-314572, A (Ricoh Company, Ltd.), | 1-6 |
| Y | 26 November, 1993 (26.11.93), Par. Nos. [0014] to [0039]; Figs. 1, 4 (Family: none) | 7-8 |
| Y | JP, 61-206925, A (Matsushita Electric Ind. Co., Ltd.), 13 September, 1986 (13.09.86), page 1, lower right column, lines 13 to 20; page 2, lower left column, line 17 to page 3, upper left column, line 2; Fig. 1 (Family: none) | 7-8 |
| Y | JP, 2000-11403, A (Sony Corporation), 14 January, 2000 (14.01.00), Par. Nos. [0015] to [0052]; Fig. 1 (Family: none) | 1-8 |
| A | JP, 6-168462, A (Sharp Corporation), 14 June, 1994 (14.06.94), Par. Nos. [0025] to [0034]; Figs. 1, 2 (Family: none) | 1-8 |

☐ Further documents are listed in the continuation of Box C. ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 01 May, 2001 (01.05.01) | 15 May, 2001 (15.05.01) |

| Name and mailing address of the ISA/ | Authorized officer |
| --- | --- |
| Japanese Patent Office | |
| Facsimile No. | Telephone No. |

Form PCT/ISA/210 (second sheet) (July 1992)